(19) Europäisches Patentamt
European Patent Office
Office européen des brevets

(11) Publication number : **0 628 601 A1**

(12) # EUROPEAN PATENT APPLICATION

(21) Application number : **94303683.0**

(22) Date of filing : **23.05.94**

(51) Int. Cl.$^5$ : **C08L 69/00,** C08L 51/04, C08L 55/02

(30) Priority : **03.06.93 US 71893**

(43) Date of publication of application : **14.12.94 Bulletin 94/50**

(84) Designated Contracting States : **DE ES FR GB IT NL**

(71) Applicant : **GENERAL ELECTRIC COMPANY**
**1 River Road**
**Schenectady, NY 12345 (US)**

(72) Inventor : **Cox, Keith Edward**
**213 Windsor Drive**
**Mineral Wells, West Virginia 26150 (US)**
Inventor : **Taylor, Stephen Lee**
**254 B Oakland Gardens**
**Washingtin, WV 26181 (US)**

(74) Representative : **Pratt, Richard Wilson et al**
**London Patent Operation**
**G.E. Technical Services Co. Inc.**
**Essex House**
**12/13 Essex Street**
**London WC2R 3AA (GB)**

(54) **Reduced gloss blends of ABS graft copolymers and polycarbonates.**

(57) An ABS/polycarbonate resin blend is provided which comprises an aromatic polycarbonate resin and an ABS graft copolymer. The blend exhibits reduced gloss and preferably reduced opacity. The ABS resin comprises small particle size butadiene rubber which is preferably styrenebutadiene and comprises a styrene acrylonitrile copolymer graft portion which is rich in styrene. The blends are useful as molding resins and exhibit reduced gloss and reduced opacity.

EP 0 628 601 A1

The present invention relates to blends of ABS graft copolymers with polycarbonate resin, and more particularly relates to reduced gloss blends of ABS graft copolymers with polycarbonate resin.

## Description of the Related Art

Compositions containing a blend of polycarbonate and ABS graft polymer are known, see for example U.S. Patent Nos. 4677162 and 4526926 which are incorporated herein by reference.

In some applications, it is desired to provide reduced gloss blends of ABS resin with polycarbonate resin.

Accordingly, the present invention provides reduced gloss blends of an ABS graft polymer and a polycarbonate resin.

## Summary of the Invention

The present invention involves a polycarbonate resin/ABS graft copolymer blend exhibiting reduced gloss and preferably reduced opacity. The blends comprise an aromatic polycarbonate resin and a graft copolymer which has a styreneacrylonitrile copolymer graft portion that is rich in styrene and has a diene rubber substrate which has a small particle size and which is preferably a styrene-butadiene rubber. The blends are useful as molding resins exhibiting reduced gloss and reduced opacity.

## Detailed Description of the Invention

The polycarbonate component included in the blend compositions may be any aromatic homopolycarbonate or co-polycarbonate known in the art. The polycarbonate component may be prepared in accordance with any of the processes generally known in the art, for example, by the interfacial polycondensation process, polycondensation in a homogeneous phase or by transesterification. These processes and the associated reactants, polymers, catalysts, solvents and conditions are well known in the art and are described in U.S. Pat. Nos. 2,964,974; 2,970,137; 2,999,835; 2,999,846; 3,028365; 3,153,008; 3,187,065; 3,215,668; 3,258,414 and 5,010,162, all of which are incorporated herein by reference. Suitable polycarbonates are based, for example, on one or more of the following bisphenols: dihydroxy diphenyls, bis-(hydroxyphenyl)-alkanes, bis-(hydroxyphenyl)-cycloalkanes, bis-(hydroxyphenyl)sulphides, bis-(hydroxyphenyl)-ethers, bis-(hydroxyphenyl)-ketones, bis(hydroxyphenyl)-sulphoxides, bis-(hydroxyphenyl)-sulphones, alkyl cyclohexylidene bisphenols, α,α-bis-(hydroxyphenyl)diisopropyl benzenes, and their nucleus-alkylated and nucleus-halogenated derivatives, and mixtures thereof.

Specific examples of these bisphenols are 4, 4'-dihydroxy diphenyl, 2,2-bis-(4-hydroxyphenyl)-propane, 2, 4-bis-(4-hydroxyphenyl)-2-methyl butane, 1, 1-bis-(4-hydroxyphenyl)-cyclohexane, α,α-bis-(4-hydroxyphenyl)-diisopropyl benzene, 2, 2-bis(3-methyl-4-hydroxyphenyl)propane, 2, 2-bis-(3-chloro-4-hydroxyphenyl)propane, 2, 2-bis-(3-chloro-4-hydroxyphenyl)propane, bis-(3, 5-dimethyl-4-hydroxyphenyl)-methane, 2, 2-bis-(3,5-dimethyl-4-hydroxyphenyl)-propane, bis-(3, 5-dimethyl-4-hydroxyphenyl)-sulphone, 2, 4-bis-(3, 5-dimethyl-4-hydroxyphenyl)-2-methyl butane, 1, 1-bis-(3, 5-dimethyl-4-hydroxyphenyl)-cyclohexane, α,α-bis-(3, 5-dimethyl-4-hydroxyphenyl)-p-diisopropyl benzene, 2, 2-bis-(3, 5-dichloro-4-hydroxyphenyl)-propane and 2, 2-bis-(3, 5-dibromo-4-hydroxyphenyl)-propane. A particular preferred bisphenol is 2, 2-bis-(4-hydroxyphenyl)-propane, more commonly known as bisphenol A. The bisphenols may be reacted with phosgene to produce the aromatic polycarbonates. Suitable polycarbonates are also set out in U.S. Patent No. 4,677,162.

The graft copolymers useful in the blends of the present invention comprise a rubber substrate formed from a diene monomer and preferably also a vinyl aromatic monomer. Preferable, the diene monomer is a conjugated diene monomer of the following formula:

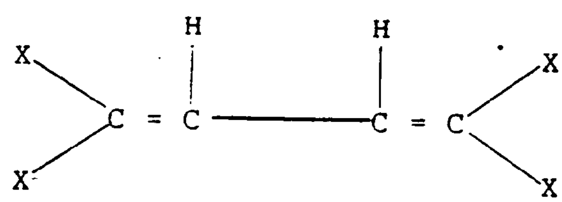

wherein X is selected from the group consisting of hydrogen, alkyl groups containing from 1 to 5 carbon atoms, chlorine and bromine. Examples of the diene monomer include 1,3 butadiene, isoprene, 1,3-heptadiene, methyl-1,3-pentadiene, 2-ethyl-1,3-pentadiene, mixtures thereof and the like. Preferably, the diene monomer

comprises 1,3 butadiene.

The rubber substrate may be formed from a diene monomer and a vinyl aromatic monomer. The vinyl aromatic monomer which is employed to form the rubber substrate may comprise unsubstituted sytrene monomer, substituted styrene monomer, or mixtures thereof. Substituted styrene monomers may include substituents on the aromatic portion and/or the vinyl group consisting of alkyl groups of from 1 to 5 carbon atoms and halogens. Preferably, the vinyl aromatic monomer which is used to form the rubber substrate comprises unsubstituted styrene.

It is further preferred that the rubber substrate is formed from at least 50 weight percent of the diene monomer, preferably butadiene, based on the total weight of the rubber substrate. Additionally, the rubber substrate is preferably formed from at least 5 percent of the vinyl aromatic monomer based on the total weight of the rubber substrate. In accordance with an important feature of the invention, the rubber substrate has a number average latex particle size of not greater than 100 nanometers. It is believed that the reduced rubber particle size and the styrene rich graft portion contribute to the reduced gloss. It is also believed that presence of styrene in the rubber contributes to improvements in opacity reduction in polymer blends containing the ABS graft copolymers.

The graft portion of the graft copolymers according to the present invention is formed from at least one vinyl aromatic monomer and at least one vinyl cyanide monomer and optionally an acrylic monomer. The vinyl aromatic monomer may comprise unsubstituted styrene monomer, substituted styrene monomer, or mixtures thereof. Substituted styrene monomers may be substituted on the aromatic portion and/or the vinyl portion with one or more groups selected from hydrogen, alkyl groups of from 1 to 5 carbon atoms, cycloaklyl groups, aryl groups, alkaryl groups, aralkyl groups, alkoxy groups, aryloxy groups and halogen atoms. Examples of substituted styrene monomers suitable for use in forming the grafted portion of the present copolymers include alphamethylstyrene, alphamethyl vinyl toluene, chlorostyrenes, bromostyrenes, 4-methylstyrene, 3,5-diethylstyrene, 4-n-propylstyrene, mixtures thereof and the like. Preferred styrene monomers for use in the grafted portion include styrene, alpha-methylstyrene and mixtures thereof.

The vinyl cyanide monomer which is used to form the grafted portion of the present copolymers is preferably selected from acrylonitrile and substituted acrylonitrile. The acrylic monomer is preferably selected from acrylic acid esters such as alkyl acrylates and alkyl methacrylates, wherein the alkyl groups contain from 1 to 4 carbon atoms. Preferably, the second monomer of the graft portion comprises acrylonitrile, methyl methacrylate or mixtures thereof, and more preferably comprises acrylonitrile.

The blend compositions of the present invention exhibit reduced gloss and preferably comprise a polycarbonate resin, an ABS graft copolymer and a non-grafted SAN rigid copolymer wherein the number average particle size of the rubber substrate of the ABS graft copolymer is less than 100nm and the styrene to acrylonitrile ratio of the graft portion of the ABS graft copolymer is between 90:10 and 78:22, preferably 90:10 to 85:15; whereas the styrene to acrylonitrile ratio of the SAN copolymer is between 80:20 and 65:35. The reduced particle size ABS graft copolymer in combination with a high S:AN ratio in the graft portion of the ABS graft polymer and use of styrene-butadiene rubber as the substrate of the graft copolymer provides blend compositions exhibiting reduced gloss and reduced opacity.

The compositions of the present invention preferably comprise: an ABS graft polymer as defined above which is made by grafting acrylonitrile and styrene onto a substrate of a rubbery diene polymer; a styrene-acrylonitrile copolymer; and a polycarbonate, preferably a bisphenol A polycarbonate.

Graft copolymers useful in the present invention have molecules which contain two or more polymeric parts of different compositions that are bonded chemically. The polymer is preferably prepared by polymerizing a conjugated diene alone, such as butadiene or a conjugated diene with a monomer copolymerizable therewith, such as styrene, to provide a rubber substrate. After formation of the rubber substrate, a graft portion chemically bonded to the rubber substrate is prepared by polymerizing a vinyl aromatic monomer and a vinyl cyanide monomer, in the presence of the prepolymerized rubber substrate to obtain the graft copolymer.

The rubber substrate, as mentioned, is preferably a conjugated diene rubber such as polybutadiene-rubber, polyisoprene-rubber, or a copolymer, such as butadiene-styrene-rubber, butadiene-acrylonitrile-rubber, or the like and is most preferably a butadiene-styrene rubber. Preferably the rubber is present in the composition at a level of at least 5 percent by weight based on the total weight of the composition.

In the preparation of the graft copolymer, the conjugated diene rubber or copolymer rubber is exemplified by a 1,3-butadiene polymer or copolymer comprises 15-85% by weight of the total graft copolymer and the average rubber particle size should be a maximum of 100nm. The monomers polymerized in the presence of the rubber substrate, exemplified by styrene and acrylonitrile, comprise from about 15 to about 85% by weight of the total graft copolymer. The ratio of vinyl aromatic monomer to vinyl cyanide monomer in the graft portion will range from 78:22 to 90:10, preferably from 85:15 to 90:10.

The second monomer of the grafting monomers, exemplified by acrylonitrile of the graft polymer composition, are preferably present at a level of from about 5% to about 20% by weight based on the total weight of the graft copolymer. The monovinyl aromatic monomer exemplified by styrene preferably is present at a level of from about 30 to about 70% by weight based on the total weight of the graft polymer composition.

In preparing the graft polymer, a certain percentage of the polymerizing monomers are not grafted onto the rubber substrate and may combine with each other directly and occur as nongrafted copolymer. However, high rubber content graft (50-85 wt % rubber based on the total weight of the graft copolymer) may be made with very little non-grafted copolymer in the product. For example, if styrene is utilized as one of the grafting monomers and acrylonitrile as the second grafting monomer, a certain portion of the composition will copolymerize as non-grafted styrene-acrylonitrile copolymer. In the case where α-methylstyrene is substituted for the styrene in the composition used in preparing the graft polymer, a certain percentage of the composition may be an α-methylstryrene-acrylonitrile copolymer.

The second major component in the product of the present invention is a non-grafted rigid thermoplastic, preferably an interpolymer of the grafting monomers in which were used for the graft portion the graft copolymer. Preferably it is a rigid copolymer of a monovinyl aromatic monomer and vinyl cyanide monomer, and more preferably a copolymer of styrene and acrylonitrile. Other copolymers, such as α-methylstyrene-acrylonitrile, may be added to the blend.

The graft copolymers of the present invention may comprise the rubber substrate and the grafted portion in any desired ratio. It is preferred, however, that the graft copolymers comprise rubber substrate at a level from 20 to 80 weight percent based on the total weight of the graft copolymer and preferably comprises graft portion at a level of 20 to 80 weight percent based on the total weight of the graft copolymer. More preferably, the graft copolymers comprise at least 50 weight percent of rubber substrate based on the total weight of the graft copolymer, whereby the polymers are of the high rubber graft (HRG) type.

The graft copolymers of the invention are formed by an emulsion polymerization process in order to obtain the desired particle size. Emulsion polymerization processes are well known in the art and are commonly employed for producing ABS resins. However, preferably a thermally activated initiator system which provides carbon radicals is employed during the emulsion polymerization process. In a preferred embodiment, the thermally activated initiator is an azonitrile. In another embodiment a coinitiator may be used, preferably peroxydisulfate. As is known in the art, emulsion polymerization processes often result in a mixture of the grafted copolymer and a rigid copolymer formed from the same monomers which are grafted to the rubber substrate.

The present compositions preferably comprise from 20 to 85 weight percent polycarbonate resin based on the total weight of the composition, more preferably from 40 to 70 weight percent thereof, and most preferably from 50 to 65 weight percent thereof. The compositions preferably comprise from 10 to 60 weight percent non-grafted rigid styrene-acrylonitrile polymer, more preferably from 15 to 45 weight percent thereof, and most preferably from 20 to 25 weight percent thereof. The composition preferably comprises from 10 to 50 weight percent ABS graft polymer, more preferably from 10 to 30 weight percent thereof, and most preferably from 15 to 20 weight percent thereof.

## Examples

Examples A-O are comparative examples, examples 1-6 illustrate the present invention. Comparative examples A-D involved blends comprising 40 weight percent polycarbonate, 45 weight percent non-grafted styrene-acrylonitrile copolymer and 15 weight percent ABS graft copolymer yielding a blend comprising 7.5 weight percent rubber. Comparative examples A-D demonstrate traditional high rubber content ABS graft copolymers having homopolybutadiene rubber and large particle size rubber which do not result in low gloss blends and which exhibit relatively high opacity. Samples E and 1 show that in a polycarbonate/ABS blend a gloss reduction is achieved with the use of a small particle size ABS graft copolymer based on a polybutadiene rubber substrate. Note that example 1 employs a higher S to AN ratio than example E in the graft portion of the ABS resin, and yields a reduced gloss in the blend. Examples 1, 2 and 3 ilustrate the use of a high styrene to acrylonitrile graft in the ABS graft copolymer results in lower gloss. Examples F, 2 and 3 demonstrate the same relationship between gloss and styrene to acrylonitrile ratio using the small particle size ABS resin with a styrene-butadiene rubber substrate. It should also be noted that the samples based on styrene-butadiene rubber result in a lower percent opacity as compared to the homopolybutadiene rubber based ABS graft polymers. Note that examples 2 and 3 have lower gloss than comparative example F.

**TABLE I**

| | A | B | C | D | E | 1 | F | 2 | 3 |
|---|---|---|---|---|---|---|---|---|---|
| PC wt% | 40 | 40 | 40 | 40 | 40 | 40 | 40 | 40 | 40 |
| SAN wt% | 45 | 45 | 45 | 45 | 45 | 45 | 45 | 45 | 45 |
| ABS wt% | 15 | 15 | 15 | 15 | 15 | 15 | 15 | 15 | 15 |
| S/AN | 70/30 | 75/25 | 80/20 | 84/16 | 72/28 | 85/15 | 72/28 | 78/22 | 85/15 |
| Substrate | PBD | PBD | PBD | PBD | PBD | PBD | SBR | SBR | SBR |
| Particle Size | >100 | >100 | >100 | >100 | <100 | <100 | <100 | <100 | <100 |
| Gardner Gloss, 60° | 74 | 81 | 79 | 73 | 51 | 44 | 62 | 56 | 44 |
| Melt Viscosity, 500°F, (poise) 1000 sec-1 | 1485 | 1475 | 1484 | 1411 | 1570 | 1636 | 1690 | 1616 | 1536 |
| Opacity, % | 86.78 | 88.85 | 85.22 | 84.01 | 87.63 | 82.06 | 80.38 | 80.50 | 78.44 |

Compounding Conditions: Leistritz TSE, Maximum Torque, 300 RPM.

S/AN means weight ratio of styrene to acrylonitrile in the graft portion of the ABS graft polymer. SAN in the above blends has a styrene to acrylonitrile weight ratio of 75 to 25. PBD means homopolybutadiene. SBR means styrene-butadiene rubber having styrene to butadiene weight ratio of 15 to 85. Notched Izod Impact Strength is measured according to ASTM D255. Gardner Gloss is measured according to ASTM D523. Weight percent rubber in the ABS above is 50 weight percent based on the total weight of the ABS resin. PC wt% is weight percent bisphenol A polycarbonate in the composition. SAN weight percent is weight percent SAN in the composition. ABS weight percent is weight percent ABS graft copolymer in the composition. The characteristics of the SAN and ABS for each example is set out in the lower portion of the chart. Particle sizes are set out as larger particle sizes indicated by >100 as meaning number average rubber particle sizes being greater than 100nm; and small particle sizes indicated by <100nm as meaning number average particle sizes being

less than 100nm. Examples G-J are comparative examples using larger rubber particle sizes. Examples K, L and 4-6 have small rubber particle sizes, and notice that examples 5 and 6 have reduced gloss over comparative example L; also notice that examples L, 5 and 6 have reduced opacity over examples K and 4. Example K had a lower gloss than example 4.

TABLE 2

| Examples | G | H | I | J | K | 4 | L | 5 | 6 |
|---|---|---|---|---|---|---|---|---|---|
| PC | 65 | 65 | 65 | 65 | 65 | 65 | 65 | 65 | 65 |
| SAN | 20 | 20 | 20 | 20 | 20 | 20 | 20 | 20 | 20 |
| ABS | 15 | 15 | 15 | 15 | 15 | 15 | 15 | 15 | 15 |
| S/AN | 70/30 | 75/25 | 80/20 | 84/16 | 72/28 | 85/15 | 72/28 | 78/22 | 85/15 |
| Substrate | PBD | PBD | PBD | PBD | PBD | PBD | SBR | SBR | SBR |
| | >100 | >100 | >100 | >100 | <100 | <100 | <100 | <100 | <100 |
| Notched Izod Impact Strength, 1/8", (ft-lb/in) | | | | | | | | | |
| 73°F | 8.9 | 12.2 | 24.6 | 16.3 | 17.7 | 20.0 | 13.7 | 14.6 | 17.4 |
| 0°F | 3.4 | 8.3 | 9.0 | 5.4 | 3.8 | 8.5 | 11.2 | 3.2 | 3.3 |
| Gardner Gloss, 60° | 83 | 95 | 91 | 93 | 67 | 71 | 79 | 69 | 62 |
| Melt Viscosity, 500°F, (poise) 1000 sec-1 | 2459 | 2583 | 2512 | 2487 | 2798 | 2799 | 2840 | 2961 | 2485 |
| Opacity, % | 90.07 | 89.04 | 85.54 | 84.54 | 87.97 | 84.50 | 80.55 | 80.74 | 79.80 |

Compounding Conditions: Leistritz TSE, Maximum Torque, 300 RPM

**TABLE 3**

| Examples | M | N | O |
|---|---|---|---|
| PC | 65 | 65 | 65 |
| ABS I | 15 | -- | -- |
| ABS II | -- | 15 | -- |
| ABSIII | -- | -- | 16.7 |
| SAN | 20 | 20 | 18.3 |
| Rubber | PBD | PBD | PBD |
| % BD in ABS | 50 | 50 | 45 |
| Graft S/AN | 3.0 | 2.67 | 2.67 |
| Particle Size | >100 | <100 | <100 |
| Gloss @ 60° | 98 | 78 | 90 |

Example M is a comparative example having rubber number average particle sizes of >100 nanometers (nm). ABS I and ABS III are made by redox initiated polymerization processes. ABS II is made by a thermally initiated polymerization process.

## Claims

1. A thermoplastic blend composition comprising:
   (a) an aromatic polycarbonate polymer;
   (b) a graft polymer formed by grafting:
      (B1) a monovinyl aromatic monomer and
      (B2) a vinyl cyanide monomer, onto
      (B3) a diene rubber substrate having a number average particle size of not greater than 100nm; and
   (c) a non-grafted copolymer of (C1) a monovinyl aromatic composition and (C2) a vinyl cyanide monomer; the ratio of B1 to B2 being from 78/22 to 90/10, the weight ratio of C1 to C2 being from 65/35 to 80/20.

2. The thermoplastic composition of Claim 1 wherein said aromatic polycarbonate is present at a level of 20 to 85 weight percent based on the total weight of the composition, said graft polymer being present at a level of from 10 to 50 weight percent based on the total weight of the composition, said non-grafted copolymer being present at a level of from 10 to 60 weight percent based on the total weight of the composition, said diene rubber substrate being present at a level of from 15 to 85 weight percent based on the total weight of the graft polymer, said diene rubber substrate being present at a level of at least 5 weight percent based on the total weight of the composition.

3. The composition of Claim 2 wherein said graft polymer is formed by grafting styrene and acrylonitrile on a diene rubber substrate, said copolymer being formed from styrene and acrylonitrile.

4. The composition of Claim 3 wherein said diene rubber substrate is a styrene-butadiene rubber substrate.

5. The composition of Claim 3 wherein said graft polymer has a rate of styrene to acrylonitrile of about 85 to 15, said copolymer having a styrene acrylonitrile ratio of about 75 to 25.

6. The composition of claim 1 consisting essentially of said aromatic polycarbonate polymer, said graft polymer and said copolymer.

7. The composition of claim 4 wherein said graft polymer consists essentially of styrene and acrylonitrile

grafted on a styrene-butadiene rubber substrate.

**8.** A process for making a reduced gloss aromatic polycarbonate/graft polymer blend comprising employing
(a) an aromatic polycarbonate polymer;
(b) a graft polymer formed by emulsion polymerizing in the presence of a thermally activated initiator:
(B1) a monovinyl aromatic monomer and
(B2) a vinyl cyanide monomer, onto
(B3) a diene rubber substrate having a number average particle size of not greater than 100nm; and
(c) a non-grafted copolymer of (C1) a monovinyl aromatic composition and (C2) a vinyl cyanide monomer; the ratio of B1 to B2 being from 78/22 to 90/10, the weight ratio of C1 and C2 being from 65/35 to 80/20.

**9.** The process of claim 8 wherein the thermally activiated initiator is an azonitrile.

**10.** The process of claim 8 further comprising a coinitiator.

**11.** The process of claim 9 wherein the coinitiator is a peroxydisulfate.

European Patent Office

# EUROPEAN SEARCH REPORT

Application Number
EP 94 30 3683

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | EP-A-0 433 723 (GENERAL ELECTRIC CO.)<br>* claims 1,6; table 1 * | 1-3,5 | C08L69/00<br>C08L51/04<br>C08L55/02 |
| X | EP-A-0 179 290 (BAYER AG)<br>* page 7, line 26 - line 31; claims 3,5; examples * | 1-8 | |
| A | EP-A-0 430 876 (CIBA-GEIGY AG)<br>* claims 1,5-7 * | 1-5 | |
| A | EP-A-0 363 797 (BASF AG)<br>* page 4, line 6 - line 17; claim 1 * | 1-5,8 | |
| A | DE-B-22 64 104 (TEIJIN LTD.)<br>* column 3, line 3 - line 67; claim 1 * | 1-8 | |
| A | EP-A-0 183 167 (MITSUBISHI RAYON CO. LTD.)<br>* page 5, line 7 - line 19; claim 1 * | 1-8 | |
| | | | TECHNICAL FIELDS SEARCHED (Int.Cl.5) |
| | | | C08L |

The present search report has been drawn up for all claims

| Place of search | Date of completion of the search | Examiner |
|---|---|---|
| BERLIN | 16 August 1994 | Angiolini, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)